# EUROPÄISCHE PATENTSCHRIFT

(11) **EP 1 164 406 B1**
(45) Veröffentlichungstag und Bekanntmachung des Hinweises auf die Patenterteilung: **17.04.2019**
(21) Anmeldenummer: 01114104.1
(22) Anmeldetag: 09.06.2001
(51) Int. Cl.: G02B 21/00, G02B 27/09, G02B 6/02, G02B 6/122, G02B 21/06, H01S 3/00, H01S 3/16, G02B 6/255

(54) **Verfahren und Vorrichtung zur Beleuchtung eines Objekts**
Method and device for illuminating an object
Méthode et appareil pour illuminer un objet

(30) Priorität: 17.06.2000 DE 10030013; 29.03.2001 DE 10115488
(43) Veröffentlichungstag der Anmeldung: 19.12.2001
(73) Patentinhaber: Leica Microsystems CMS GmbH, 35578 Wetzlar (DE)
(72) Erfinder: Birk, Holger, 74909 Meckesheim (DE); Storz, Rafael, 8280 Kreuzlingen (DE); Engelhardt, Johann, 76669 Bad Schönborn (DE); Möllmann, Kyra, 67705 Stelzenberg (DE)
(74) Vertreter: Schaumburg und Partner Patentanwälte mbB

(56) Entgegenhaltungen:
- EP-A1- 0 819 963
- EP-A2- 0 977 069
- WO-A1-00/04613
- DE-A- 19 622 359
- JP-A- H10 293 094
- US-A- 5 802 236
- RANKA J K ET AL: "VISIBLE CONTINUUM GENERATION IN AIR-SILICA MICROSTRUCTURE OPTICAL FIBERS WITH ANOMALOUS DISPERSION AT 800 NM" OPTICS LETTERS, OPTICAL SOCIETY OF AMERICA, WASHINGTON, US, Bd. 25, Nr. 1, 1. Januar 2000 (2000-01-01), Seiten 25-27, XP000928530 ISSN: 0146-9592
- BIRKS T A ET AL: "SUPERCONTINUUM GENERATION IN TAPERED FIBERS" OPTICS LETTERS, OPTICAL SOCIETY OF AMERICA, WASHINGTON, US, Bd. 25, Nr. 19, 1. Januar 2000 (2000-01-01), Seiten 1415-1417, XP000981159 ISSN: 0146-9592
- PSHENICHNIKOV ET AL.: OPTICS LETTERS, vol. 19, no. 8, 15 April 1994 (1994-04-15) , pages 572-574, XP000440036, Washington, US
- A.B. FEDOTOV ET AL.: "Spectral Broadening of Femtosecond Laser Pulses in Fibers with a Photonic-Crystal Cladding", JETP LETTERS TRANSLATED, vol. 71, no. 7, July 2000 (2000-07), pages 281-284, XP002463897,
- G. SCHMITZ ET AL.: "Fluorescence recovery after photobleaching measured by confocal microscopy as a tool for the analysis of vesicular lipid transport and plasma membrane mobility", PROCEEDINGS OF SPIE, no. 3260, 1998, pages 127-135, XP003002563, Bellingham, VA, US

## Beschreibung

Die Erfindung betrifft ein Verfahren zur Beleuchtung eines Objektes.

Weiterhin betrifft die Erfindung eine Vorrichtung zur Beleuchtung eines Objekts.

Aus der Offenlegungsschrift DE 198 53 669 A1 ist eine Ultrakurzpulsquelle mit steuerbarer Mehrfachwellenlängenausgabe offenbart, die insbesondere in einem Multiphotonenmikroskop Anwendung findet. Das System weist einen Ultrakurzimpulslaser zur Erzeugung ultrakurzer optischer Impulse einer festen Wellenlänge und zumindest einen Wellenlängenumwandlungskanal auf.

Die Patentschrift US 6,097,870 offenbart eine Anordnung zur Generierung eines Breitbandspektrums im sichtbaren und infraroten Spektralbereich. Die Anordnung basiert auf einer mikrostrukturierten Faser, in die das Licht eines Pumplasers eingekoppelt wird. Das Pumplicht wird in der mikrostrukturierten Faser durch nichtlineare Effekte verbreitert. Als mikrostrukturierte Faser findet auch sog. Photonic-Band-Gap-Material oder "photonic crystal fibres", "holey fibers" oder "microstructured fibers" Verwendung. Es sind auch Ausgestaltungen als sog. "Hollow fiber" bekannt.

Eine weitere Anordnung zur Generierung eines Breitbandspektrums ist in der Veröffentlichung von Birks et al.: "Supercontinuum generation in tapered fibers", Opt.Lett. Vol. 25, p.1415 (2000), offenbart. In der Anordnung wird eine herkömmliche Lichtleitfaser mit einem Faserkern, die zumindest entlang eines Teilstücks eine Verjüngung aufweist verwendet. Lichtleitfasern dieser Art sind als sog. "tapered fibers" bekannt.

Aus der PCT-Anmeldung mit der Publikationsnummer WO 00/04613 ist ein optischer Verstärker bekannt, dessen Verstärkung in Abhängigkeit von der Wellenlänge einstellbar ist. Ferner ist in der genannten Publikation eine auf diesem Prinzip beruhende Faserlichtquelle offenbart.

Bogenlampen sind als breitbandige Lichtquellen bekannt und werden in vielen Bereichen verwendet. Exemplarisch sei hier die US-Patentschrift 3,720,822 "XENON PHOTOGRAPHY LIGHT" genannt, die eine Xenon-Bogenlampe zur Beleuchtung in der Photografie offenbart.

Insbesondere in der Mikroskopie, der Endoskopie, der Flußzytometrie, der Chromatographie und in der Lithographie sind zur Beleuchtung der Objekte universelle Beleuchtungseinrichtungen mit hoher Leuchtdichte wichtig. In der Scanmikroskopie wird eine Probe mit einem Lichtstrahl abgerastert. Hierzu werden oft Laser als Lichtquelle eingesetzt. Aus der EP 0 495 930: "Konfokales Mikroskopsystem für Mehrfarbenfluoreszenz" ist beispielsweise ein Anordnung mit einem einzelnen mehrere Laserlinien emittierenden Laser bekannt. Derzeit werden hierfür meist Mischgaslaser, insbesondere ArKr-Laser, eingesetzt. Als Probe werden beispielsweise mit Fluoreszenzfarbstoffen präparierte, biologische Gewebe oder Schnitte untersucht. Im Bereich der Materialuntersuchung wird oft das von der Probe reflektierte Beleuchtungslicht detektiert. Auch Festkörperlaser und Farbstofflaser, sowie Faserlaser und Optisch-Parametrische-Oszillatoren (OPO), denen ein Pumplaser vorgeordnet ist, werden häufig verwendet.

Mikrospotarrays oder sog. Microplates werden in der Gen-, Medizin- und Biodiagnostik zur Untersuchung großer Anzahlen von spezifisch markierten Spots, die vorzugsweise gitterförmig aufgebracht sind, verwendet. Ein sowohl in der Anregungs-, als auch in der Detektionswellenlänge einstellbarer Microplate-Reader ist in der europäischen Patentanmeldung EP 0 841 557 A2 offenbart.

Die aus dem Stand der Technik bekannten Verfahren zur Beleuchtung und Beleuchtungsvorrichtungen haben mehrere Nachteile. Die bekannten breitbandigen Beleuchtungsvorrichtungen weisen meist eine im Vergleich zu laserbasierenden Beleuchtungseinrichtungen geringe Leuchtdichte auf, während diese dem Benutzer nur diskrete Wellenlängenlinien zur Verfügung stellen, deren spektrale Lage und Breite, wenn überhaupt, nur in geringem Maße einstellbar ist. Durch diese Begrenzung des Arbeitsspektrums sind die bekannten Beleuchtungseinrichtungen nicht flexibel einsetzbar. Laserbasierende Beleuchtungseinrichtungen und Beleuchtungsverfahren haben darüber hinaus den Nachteil, dass durch die hohe Kohärenz des Laserlichtes störende Interferenzerscheinungen, wie beispielsweise Beugungsringe und Newtonringe, auftreten. Oft werden zur Reduzierung dieser Interferenzeffekte zusätzliche optische Elemente eingesetzt, die die Lichtleistung durch Eigenabsorption und Streuung reduzieren.

Nächstliegender Stand der Technik ist Dokument EP 0 977 069 A2, das ein Verfahren und eine Vorrichtung zur Beleuchtung eines auf einem Träger aufliegenden Objekts offenbart. Aus verschiedenen Laser-Lichtquellen wird jeweils ein Teillichtstrahl abgespalten und dessen spektrale Zusammensetzung wird mit Hilfe von austauschbaren Linienfiltern ermittelt.

Aus A.B. FEDOTOV ET AL.: "Spectral Broadening of Femtosecond Laser Pulses in Fibers with a Photonic-Crystal Cladding" JETP LETTERS TRANSLATED, Bd. 71, Nr. 7, Juli 2000, Seiten 281-284, XP002463897,
ist es bekannt, Laserlichtpulse mit Hilfe einer photonischen Kristallfaser spektral zu verbreitern. Das spektral verbreiterte Licht wird einem Spektrometer zugeführt, um das Spektrum mit einer CCD-Kamera zu erfassen und mit Hilfe eines Computers auszuwerten.

Der Erfindung liegt die Aufgabe zugrunde, ein Verfahren und eine Vorrichtung zur Beleuchtung eines Objekts anzugeben, das bzw. welche einen breiten Spektralbereich überdeckt, der mit hoher Genauigkeit an unterschiedliche Anwendungen flexibel anpassbar ist.

Die objektive Aufgabe wird für ein Verfahren durch die Merkmale des Anspruchs 1 und für eine Vorrichtung durch die Merkmale des Anspruchs 6 gelöst.

Die Erfindung hat den Vorteil, dass sie universell einsetzbar, leicht zu handhaben und flexibel ist, und darüber hinaus eine Beleuchtung mit Licht aus einem breiten Wellenlängenbereich bietet. Das Licht weist außerdem einesehr geringe Kohärenz auf, wodurch störende Interferenzerscheinungen vermieden sind.

Durch die Verwendung von mikrostrukturierten Fasern, wie es in der bereits erwähnten US-Patentschrift 6,097,870 oder in der Veröffentlichung von Birks et al. beschrieben ist, wird ein breites kontinuierliches Wellenlängenspektrum zugänglich. Anordnungen der offenbarten Art sind jedoch insbesondere auf Grund der Komplexität der einzelnen optischen Komponenten und deren Justierung zueinander umständlich zu handhaben, unflexibel und störungsanfällig.

Von besonderem Vorteil ist eine Ausgestaltungsvariante, in der der mikrostrukturierten optischen Lichtleitfaser eine Optik nachgeordnet ist, die das spektral verbreiterte Licht zu einem Strahl formt. Diese Optik befindet sich vorzugsweise innerhalb eines Gehäuses, das die gesamte Vorrichtung beherbergt, unmittelbar vor oder in einer Lichtaustrittsöffnung. Bei der Optik handelt es sich vorzugsweise um eine Variooptik mit der verschiedene divergente, kollimierte oder konvergente Strahlformen erzeugbar sind.

Als Laser sind alle gängigen Lasertypen verwendbar. In einer bevorzugten Ausgestaltung ist der Laser ein Kurzpulslaser, beispielsweise ein modenverkoppelter Festkörperlaser, der Lichtpulse einer Dauer von 100 fs bis 10 ps emittiert. Die Wellenlänge des Lasers ist vorzugsweise der "Nulldispersionswellenlänge" der Faser angepasst sein, oder ungekehrt. Scheinbar kann man die Nulldispersionswellenlänge über einen bestimmten Wellenlängenbereich "schieben", was beim Ziehen der Faser berücksichtigt werden muss.

Eine Vorrichtung zur Variierung der Leistung des spektral verbreiterten Lichtes ist vorgesehen. Dies sind beispielsweise akustooptische oder elektrooptische Elemente, wie akustooptische, einstellbare Filter (acusto optical tunable filter, AOTF). Ebenso sind dielektrische Filter oder Farbfilter verwendbar, die vorzugsweise kaskadiert angeordnet sind. Eine besondere Flexibilität wird dadurch erreicht, dass die Filter in Revolvern oder in Schiebefassungen angebracht sind, die ein leichtes Einbringen in den Strahlengang des spektral verbreiterten Lichtes ermöglichen.

Ganz besonders vorteilhaft ist eine Ausgestaltung, die ein Auswählen mindestens eines Wellenlängenbereichs aus dem spektral verbreiterten Licht erlaubt, wobei das Licht des ausgewählten Wellenlängenbereichs auf das Objekt gerichtet wird. Dies kann beispielsweise mit einer Vorrichtung realisiert sein, die das spektral verbreiterte Licht räumlich spektral aufzuspaltet, um mit einer geeigneten variablen Blenden- oder Filteranordnung spektrale Anteile zu unterdrücken oder ganz auszublenden und anschließend die verbliebenen Spektralanteile wieder zu einem Strahl zu vereinigen. Zur räumlich spektralen Aufspaltung ist beispielsweise ein Prisma oder ein Gitter verwendbar.

Das erfindungsgemäße Verfahren umfasst in einer speziellen Ausgestaltung den weiteren Schritt des Einstellens der Leistung des spektral verbreiterten Lichts. Zur Variierung der Leistung des spektral verbreiterten Lichtes ist in einer weiteren Ausführungsvariante ein Fabry-Perot-Filter vorgesehen. Auch LCD-Filter sind einsetzbar.

Das Verfahren zur Beleuchtung umfasst den zusätzlichen Schritt des Einstellens der spektralen Zusammensetzung des spektral verbreiterten Lichts.

Die erfindungsgemäße Vorrichtung weist direkt ein Bedienelement mit einer Computermaus zur Einstellung der Lichtleistung und der spektralen Zusammensetzung des spektral verbreiterten Lichtes auf.

Dies kann ein Bedienpult oder ein PC sein. Die Einstelldaten werden vorzugsweise in Form von elektrischen Signalen an die Vorrichtung zur Beleuchtung bzw. an die Vorrichtung zur Variierung der Leistung des spektral verbreiterten Lichtes übertragen.

Besonders anschaulich ist die Einstellung über Schieber (Slider), die auf einem Display eines PCs angezeigt sind und mit der Computermaus bedient werden.

Erfindungsgemäß ist erkannt worden, dass die Divergenz des in die mikrostrukturierte optische Lichtleitfaser eingestrahlten Lichtes erheblichen Einfluss auf die spektrale Verteilung des spektral verbreiterten Lichtes hat. In einer besonders bevorzugten und flexiblen Ausgestaltung beinhaltet die Vorrichtung zur Beleuchtung eine Fokussieroptik, die den Lichtstrahl des Lasers auf die mikrostrukturierte optische Lichtleitfaser fokussiert. Besonders vorteilhaft ist eine Ausführung der Fokussieroptik als Variooptik, beispielsweise als Zoomoptik.

Da die spektrale Verteilung des spektral verbreiterten Lichtes von der Polarisation und der Wellenlänge des in das mikrostrukturierte optische Element eingestrahlten Lichtes abhängt, sind in einer besonderen

Ausgestaltungsform Vorrichtungen zur Einstellung und Beeinflussung dieser Parameter vorgesehen. Bei Lasern, die linear polarisiertes Licht emittieren, wird eine drehbar gelagerte λ/2-Platte zur Drehung der Polariationsebne verwendet. Etwas Aufwendiger, jedoch auch flexibler, ist die Verwendung einer Pockelszelle, die die Einstellung auch jeder beliebigen elliptischen Polarisation erlaubt, oder eines Faradayrotators. Zur Einstellung der Wellenlänge ist vorzugsweise im Laser eine Doppelbrechende Platte oder ein kippbares Etalon vorgesehen.

Eine Vorrichtung ist vorgesehen, die eine Analyse des in der Wellenlänge verbreiterten Lichtes insbesondere hinsichtlich der spektralen Zusammensetzung und der Lichtleistung ermöglicht. Die Analysevorrichtung ist derart angeordnet, dass ein Teil des spektral verbreiterten Lichtes mit Hilfe eines Strahlteilers abgespalten und der Analysevorrichtung zugeführt wird. Die Analysevorrichtung ist vorzugsweise ein Spektrometer. Sie enthält beispielsweise ein Prisma oder ein Gitter zur räumlich spektralen Aufspaltung und ein CCD-Element oder einen Mehrkanalphotomultiplier als Detektor. In einer anderen Variante beinhaltet die Analysevorrichtung einen Multibanddetektor. Auch Halbleiterspektrometer sind verwendbar.

Zur Feststellung der Leistung des spektral verbreiterten Lichtes sind die Detektoren derart ausgestaltet, dass ein zur Lichtleistung proportionales elektrisches Signal erzeugt wird, das von einer Elektronik oder einem Computer auswertbar ist.

Die erfindungsgemäße Vorrichtung beinhaltet eine Anzeige für die Leistung des spektral verbreiterten Lichtes und/oder für die spektrale Zusammensetzung des spektral verbreiterten Lichtes beinhaltet. Die Anzeige ist vorzugsweise direkt an dem Gehäuse oder dem Bedienpult angebracht. In einer anderen Ausführungsform dient das Display eines PCs zur Anzeige der Leistung bzw. der spektralen Zusammensetzung.

In einer weiteren Ausgestaltung umfasst das erfindungsgemäße Verfahren den Schritt des Einstellens der Polarisation des spektral verbreiterten Lichts. Hierzu ist ein drehbar angeordneter Polarisationsfilter, eine λ/2-Platte oder eine Pockelszelle oder ein Faradayrotator vorgesehen.

In einer sehr bevorzugten Ausführungsform ist der Laser ein Pulslaser, der vorzugsweise Lichtpulse einer Pulsenergie, die größer als 1 nJ ist, emittiert. Das erfindungsgemäße Verfahren umfasst in Bezug auf diese Ausgestaltung den zusätzlichen Schritt des Einstellens der Pulsbreite des spektral verbreiterten Lichts. Weiterhin ist es von Vorteil, wenn das Verfahren den weiteren Schritt des Einstellens des Chirps des spektral verbreiterten Lichts ermöglicht. Durch diese zusätzlichen Schritte sind die Pulseigenschaften des auf das Objekt gerichteten Lichtes individuell auf das jeweilige Objekt anpassbar. Unter Chirp ist die zeitliche Abfolge des Lichtes unterschiedlicher Wellenlängen innerhalb eines Pulses zu verstehen. Die erfindungsgemäße Vorrichtung umfasst hierzu vorzugsweise eine Prismen oder Gitteranordnung, die in ganz bevorzugter Ausgestaltung mit einem LCD-Streifengitter kombiniert ist. Anordnungen zur Variierung der Pulsdauer und des Chirps sind einem Fachmann hinlänglich bekannt.

Das Verfahren und die Vorrichtung zur Beleuchtung ist ganz besonders für die Beleuchtung eines mikroskopischen Objekts, insbesondere in einem Mikroskop, einem Videomikroskop, einem Scanmikroskop oder konfokalen Scanmikroskop, einsetzbar. Von ganz besonderem Vorteil ist es, dass die Wellenlänge des auf das Objekt gerichteten Lichtes bei Fluoreszenzanwendungen oder Anwendungen die auf dem Förstertransfer beruhen, genau der Anregungswellenlänge der im Objekt vorhandenen Fluorochrome angepasst wird.

Auch in der Endoskopie, der Flußzytometrie und in der Lithographie ist das Verfahren und die Vorrichtung zur Beleuchtung ganz besonders vorteilhaft einsetzbar.

Die mikrostrukturierte optische Lichtleitfaser ist in einer bevorzugten Ausgestaltung des Scanmikroskops aus einer Vielzahl von mikrooptischen Strukturelementen aufgebaut, die zumindest zwei unterschiedliche optische Dichten aufweisen. Ganz besonders bevorzugt ist eine Ausgestaltung, bei der die optische Lichtleitfaser einen ersten Bereich und einen zweiten Bereich beinhaltet, wobei der erste Bereich eine homogene Struktur aufweist und in dem zweiten Bereich eine mikroskopische Struktur aus mikrooptischen Strukturelementen gebildet ist. Von Vorteil ist es außerdem, wenn der erste Bereich den zweiten Bereich umschließt. Die mikrooptischen Strukturelemente sind vorzugsweise Kanülen, Stege, Waben, Röhren oder Hohlräume.

Die mikrostrukturierte optische Lichtleitfaser besteht in einer anderen Ausgestaltung aus nebeneinander angeordnetem Glas- oder Kunststoffmaterial und Hohlräumen. Vorzugsweise ist zwischen dem Laser und der Lichtleitfaser eine optische Diode vorgesehen, die Rückreflexionen des Lichtstrahles die von, den Enden der Lichtleitfaser herrühren, unterdrückt.

Eine ganz besonders bevorzugte und einfach zu realisierende Ausführungsvariante umfasst die mikrostrukturierte optische Lichtleitfaser eine herkömmliche Lichtleitfaser mit einem Faserkerndurchmesser von ca. 9 µm, die zumindest entlang eines Teilstücks eine Verjüngung aufweist. Lichtleitfasern dieser Art sind als sog. "tapered fibers" bekannt. Vorzugsweise ist die Lichtleitfaser insgesamt 1 m lang und weist eine Verjüngung auf einer Länge von 30 mm bis 90 mm auf. Der Durchmesser der Lichtleitfaser beträgt in einer bevorzugten Ausgestaltung im Bereich der Verjüngung ca. 2 µm. Der Faserkerndurchmesser liegt entsprechend im Nanometerbereich.

In der Zeichnung ist der Erfindungsgegenstand schematisch dargestellt und wird anhand der Figuren nachfolgend beschrieben. Dabei zeigen:
- Fig. 1: einen Ablaufplan des erfindungsgemäßen Verfahrens,
- Fig. 2: eine erfindungsgemäße Beleuchtungseinrichtung mit einem Leistungsmesser und einer Anzeige,
- Fig. 3: die exemplarisch die Verwendung einer erfindungsgemäßen Vorrichtung in einem konfokalen Scanmikroskop,
- Fig. 4: eine Ausführung der mikrostrukturierten optischen Lichtleitfaser und
- Fig. 5: eine weitere Ausführung der mikrostrukturierten optischen Lichtleitfaser.

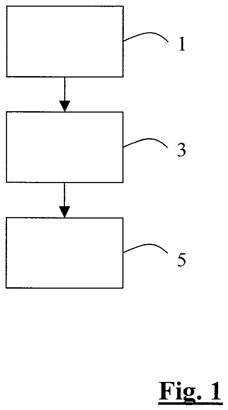

Fig. 1 zeigt einen Ablaufplan des erfindungsgemäßen Verfahrens. In einem ersten Schritt erfolgt das Einstrahlen 1 des Lichtes eines Lasers in eine mikrostrukturierte optische Lichtleitfaser, das das Licht spektral verbreitert. Hierbei wird das Licht beispielsweise mit Hilfe von Spiegeln zu der mikrostrukturierten optischen Lichtleitfaser geleitet und vorzugsweise mit einer Variooptik auf die mikrostrukturierte optische Lichtleitfaser fokussiert. In einem zweiten Schritt erfolgt das Formen 3 des von der mikrostrukturierten optischen Lichtleitfaser ausgehenden Lichts zu einem Beleuchtungslichtstrahl vorzugsweise mit Hilfe von kollimierenden Optiken, die als Linsensysteme ausgestaltet sind. In einem weiteren Schritt erfolgt Richten 5 des Beleuchtungslichtstrahles auf das Objekt.

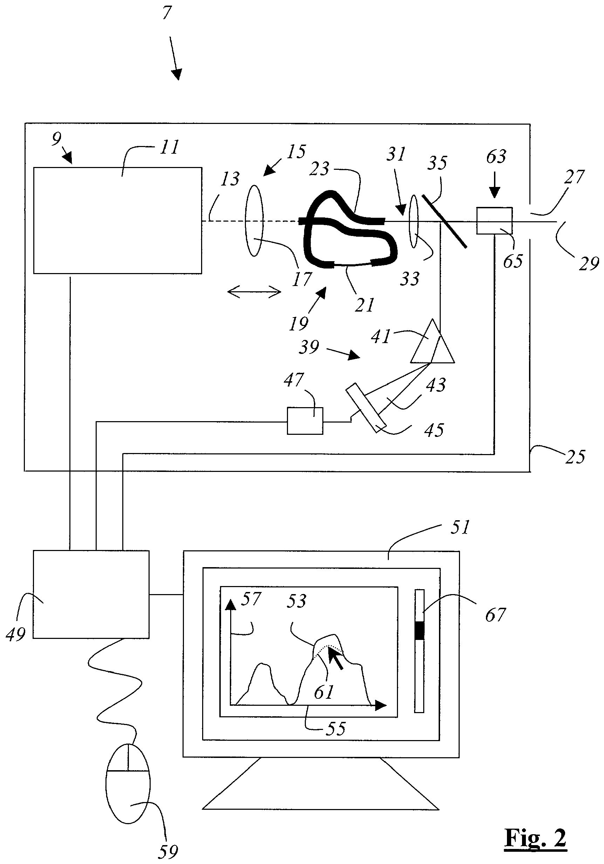

Fig. 2 zeigt eine Vorrichtung zur Beleuchtung 7 die einen Laser 9 beinhaltet, der als modengekoppelter Ti:Saphir-Laser 11 ausgeführt ist und der einen Lichtstrahl 13, der gestrichelt gezeichnet ist, mit der Eigenschaft eines optischen Pulszugs emittiert. Die Dauer der Lichtimpulse beträgt ca. 100 fs bei einer Repetitionsrate von ca. 80 MHz. Der Lichtstrahl 13 wird mit der Fokussieroptik 15, die als Zoomoptik 17 ausgestaltet und entlang der Fortpflanzungsrichtung des Lichtstrahles verschiebbar angeordnet ist, auf eine mikrostrukturierte optische Lichtleitfaser 19 fokussiert. Die mikrostrukturierte optische Lichtleitfaser 19 besteht aus einer, eine Verjüngung 21 aufweisenden Lichtleitfaser 23. In der mikrostrukturierten optischen Lichtleitfaser wird das Licht des Lasers spektral verbreitert. Alle Komponenten befinden sich in einen Gehäuse 25 mit einer Lichtaustrittsöffnung 27, durch die der Beleuchtungslichtstrahl 29, als divergent verlaufender Strahl, das Gehäuse 25 verlässt. Das Spektrum des spektral verbreiterten Lichts 31 reicht von etwa 300 nm bis 1600 nm, wobei die Lichtleistung über das gesamte Spektrum weitgehend konstant ist. Das aus der Lichtleitfaser 23 austretende, spektral verbreiterte Licht 31, wird mit Hilfe der Optik 33 zu dem kollimierten Beleuchtungslichtstrahl 29 geformt. Mit dem Strahlteiler 35 wird ein Teillichtstrahl 37 des Beleuchtungslichtstrahls 29 abgespalten und auf eine Analysevorrichtung 39 gelenkt. Diese beinhaltet ein Prisma 41, das den Teillichtstrahl 37 räumlich spektral zu einem in der Auffächerungsebene divergent verlaufenden Lichtbündel 43 auffächert, und eine Photodiodenzeile 45 zur Detektion des Lichtes. Die Photodiodenzeile 45 erzeugt zur Leistung des Lichtes des jeweiligen Spektralbereichs proportionale elektrische Signale, die einer Verarbeitungseinheit 47 zugeführt werden. Diese ist mit einem PC 49 verbunden, auf dessen Monitor 51 die spektrale Zusammensetzung in Form eines Graphen 53 innerhalb eines Koordinatensystems mit zwei Achsen 55, 57 angezeigt wird. An der Achse 55 ist die Wellenlänge aufgetragen und an der Achse 57 die Leistung des Lichtes. Durch Anklicken des Graphen 53 mittels einer Computermaus 59 bei gleichzeitigem Verschieben der Computermaus 59 wird ein gestrichelter Graph 61 erzeugt, der entsprechend der Bewegung der Computermaus 59 verformbar ist. Im Augenblick eines erneuten Klickens mit der Computermaus 59 wird über den Computer 49 eine Vorrichtung zur Variierung der Leistung 63 derart angesteuert, dass sich die mit dem gestrichelten Graphen 61 vorgewählte spektrale Zusammensetzung ergibt. Die Vorrichtung zur Variierung der Leistung 63 des spektral verbreiterten Lichtes 31 ist als AOTF 65 (acousto optical tunable filter) ausgeführt und derart ausgestaltet, das Wellenlängen unabhängig voneinander beeinflusst werden, und so die spektrale Zusammensetzung des spektral verbreiterten Lichts 31 einstellbar ist. Außerdem ist eine Steuerung der Ausgangsleistung des Lasers 9 über den Computer vorgesehen. Der Benutzer nimmt Einstellungen mit Hilfe der Computermaus 59 vor. Auf dem Monitor 51 ist ein Slider 67 dargestellt, der zur Einstellung der Gesamtleistung des spektral verbreiterten Lichtes 31 dient.

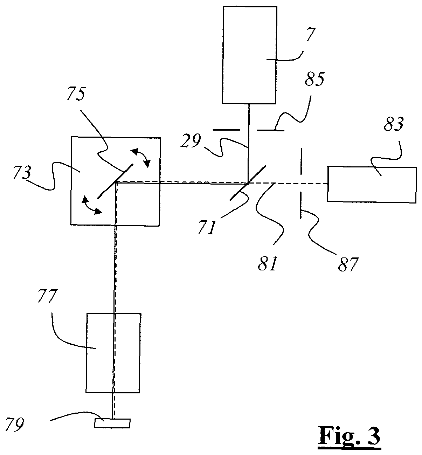

Fig. 3 stellt exemplarisch die Verwendung einer erfindungsgemäßen Vorrichtung in einem konfokalen Scanmikroskop 69 dar. Der von der Vorrichtung zur Beleuchtung 7 kommende Beleuchtungslichtstrahl 29 wird von einem Strahlteiler 71 zum Scanmodul 73 reflektiert, das einen kardanisch aufgehängten Scanspiegel 75 beinhaltet, der den Lichtstrahl 29 durch die Mikroskopoptik 77 hindurch über bzw. durch das Objekt 79 führt. Der Beleuchtungslichtstrahl 29 wird bei nicht transparenten Objekten 79 über die Objektoberfläche geführt. Bei biologischen Objekten 79 oder transparenten Objekten 79 kann der Beleuchtungslichtstrahl 29 auch durch das Objekt 79 geführt werden. Dies bedeutet, dass verschiedene Fokusebenen des Objekts 79 nacheinander mit dem Beleuchtungslichtstrahl 29 beleuchtet und somit abgetastet werden. Die nachträgliche Zusammensetzung ergibt dann ein dreidimensionales Bild des Objekts 79. Der von der Vorrichtung zur Beleuchtung 7 kommende Lichtstrahl 29 ist in der Abbildung als durchgezogene Linie dargestellt. Das vom Objekt 79 ausgehende Licht 81 gelangt durch die Mikroskopoptik 77 und über das Scanmodul 73 zum Strahlteiler 71, passiert diesen und trifft auf Detektor 83, der als Photomultiplier ausgeführt ist. Das vom Objekt 79 ausgehende Licht 81 ist als gestrichelte Linie dargestellt. Im Detektor 83 werden elektrische, zur Leistung des vom Objekt 79 ausgehenden Lichtes 81 proportionale Detektionssignale erzeugt und weiterverarbeitet. Das bei einem konfokalen Scanmikroskop üblicherweise vorgesehene Beleuchtungspinhole 85 und das Detektionspinhole 87 sind der Vollständigkeit halber schematisch eingezeichnet. Weggelassen sind wegen der besseren Anschaulichkeit hingegen einige optische Elemente zur Führung und Formung der Lichtstrahlen. Diese sind einem auf diesem Gebiet tätigen Fachmann hinlänglich bekannt.

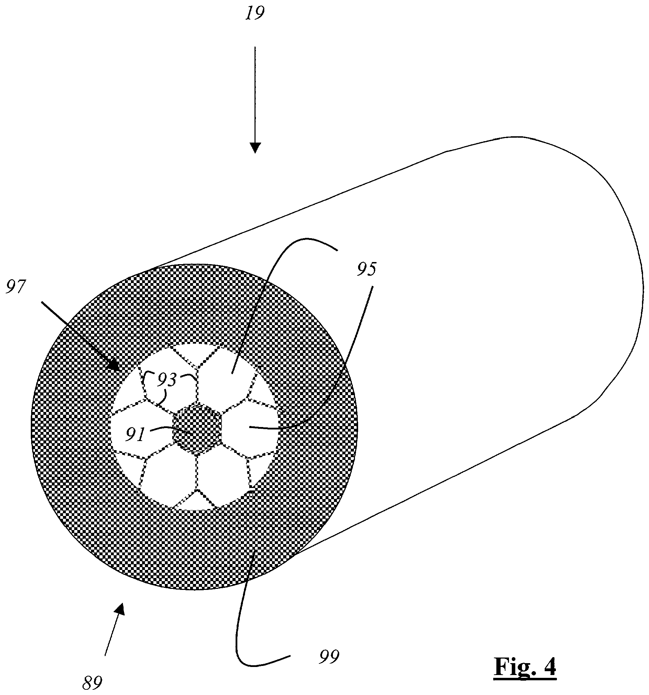

Fig. 4 zeigt eine Ausführung der mikrostrukturierten optischen Lichtleitfaser 19. Dieses besteht aus Photonic-Band-Gap-Material, das eine besondere wabenförmige Mikrostruktur 89 aufweist. Die gezeigte Wabenstruktur ist für die Generierung von breitbandigem Licht besonders geeignet. Der Durchmesser der Glasinnenkanüle 91 beträgt ca. 1,9 µm. Die innere Kanüle 91 ist von Glasstegen 93 umgeben. Die Glasstege 93 formen wabenförmige Hohlräume 95. Diese mikrooptischen Strukturelemente bilden gemeinsam einen zweiten Bereich 97, der von einem ersten Bereich 99, der als Glasmantel ausgeführt ist, umgeben ist.

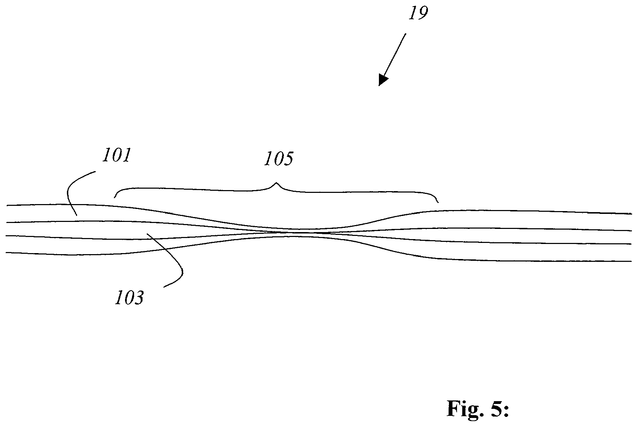

Fig. 5 zeigt schematisch eine Ausführung der mikrostrukturierten optischen Lichtleitfaser 19. In dieser Ausführung besteht die mikrostrukturierte optische Lichtleitfaser 19 aus einer herkömmlichen Lichtleitfaser 101 mit einem Außendurchmesser von 125 µm und einem Faserkern 103, der einen Durchmesser von 6 µm aufweist. Im bereich einer 300 mm langen Verjüngung 105 ist der Aussendruchmesser der Lichtleitfaser 101 auf 1,8 µm reduziert. In diesem Bereich beträgt der Durchmesser des Faserkerns 103 nur noch Bruchteile von Mikrometern.

### Bezugszeichenliste:

- 1: Einstrahlen
- 3: Formen
- 5: Richten
- 7: Vorrichtung zur Beleuchtung
- 9: Laser
- 11: Ti:Saphir-Laser
- 13: Lichtstrahl
- 15: Fokussieroptik
- 17: Zoomoptik
- 19: mikrostrukturierte optische Lichtleitfaser
- 21: Verjüngung
- 23: Lichtleitfaser
- 25: Gehäuse
- 27: Lichtaustrittsöffnung
- 29: Beleuchtungslichtstrahl
- 31: spektral verbreitertes Licht
- 33: Optik
- 35: Strahlteiler
- 37: Teillichtstrahl
- 39: Analysevorrichtung
- 41: Prisma
- 43: Lichtbündel
- 45: Photodiodenzeile
- 47: Verarbeitungseinheit
- 49: PC
- 51: Monitor
- 53: Graph
- 55: Achse
- 57: Achse
- 59: Computermaus
- 61: gestrichelter Graph
- 63: Vorrichtung zur Variierung der Leistung
- 65: AOTF
- 67: Slider
- 69: konfokales Scanmikroskop
- 71: Strahlteiler
- 73: Scanmodul
- 75: Scanspiegel
- 77: Mikroskopoptik
- 79: Objekt
- 81: ausgehendes Licht
- 83: Detektor
- 85: Beleuchtungspinhole
- 87: Detektionspinhole
- 89: Mikrostruktur
- 91: Glasinnenkanüle
- 93: Glasstege
- 95: Hohlräume
- 97: zweiter Bereich
- 99: erster Bereich
- 101: Lichtleitfaser
- 103: Faserkern
- 105: Verjüngung

## Patentansprüche

1. Verfahren zur Beleuchtung eines Objekts (79) umfassend folgende Schritte:
- Einstrahlen (1) des Lichtstrahls (13) eines Lasers (9) in eine mikrostrukturierte optische Lichtleitfaser (19), die das Licht des Lichtstrahls (13) spektral verbreitert,
- Formen (3) des spektral verbreiterten Lichts (31) zu einem Beleuchtungslichtstrahl (29),
- Abspalten eines Teillichtstrahls (37) und Lenken des Teillichtstrahls (37) auf eine Analysevorrichtung (39);
- Zuführen elektrischer Signale aus der Analysevorrichtung (39) einer Verarbeitungseinheit (47), über die auf einem Monitor (51), dem ein Computer (49) zugeordnet ist, die spektrale Zusammensetzung des Teillichtstrahls (37) in Form eines Graphen (53) dargestellt wird;
- Vorwahl einer bestimmten spektralen Zusammensetzung durch Anklicken des Graphen (53) mittels einer Computermaus (59), wobei ein gestrichelter Graph (61) erzeugt wird, der entsprechend der Bewegung der Computermaus (59) verformbar ist;
- Variieren der Leistung (63) des spektral verbreiterten Lichtes, so dass der Beleuchtungslichtstrahl (29) hinsichtlich der vorgewählten spektralen Zusammensetzung des spektral verbreiterten Lichts (31) eingestellt wird; und
- Richten (5) des Beleuchtungslichtstrahles (29) auf das Objekt (79).

2. Verfahren nach Anspruch 1, **gekennzeichnet durch** die weiteren Schritte:
- Einstellen der Leistung des spektral verbreiterten Lichts (31) und/oder
- Einstellen der Polarisation des spektral verbreiterten Lichts (31).

3. Verfahren nach Anspruch 1, **dadurch gekennzeichnet, dass** der Laser (9) ein Pulslaser ist.

4. Verfahren nach Anspruch 3, **gekennzeichnet durch** die weiteren Schritte:
- Einstellen der Pulsbreite des spektral verbreiterten Lichts (31) und/oder
- Einstellen des Chirps des spektral verbreiterten Lichts (31).

5. Verfahren nach Anspruch 1, **dadurch gekennzeichnet, dass** das Verfahren in der Mikroskopie oder in der Endoskopie oder in der Flußzytometrie oder in der Chromatographie oder in der Lithographie oder in der Videomikroskopie verwendet wird.

6. Vorrichtung zur Beleuchtung (7) eines Objekts (79), wobei die Vorrichtung
einen Laser (9),
eine mikrostrukturierte optische Lichtleitfaser (19),
eine Optik (33),
einen Strahlteiler (35),
eine Analysevorrichtung (39),
eine Verarbeitungseinheit (47),
einen Monitor (51),
eine Computermaus (59) und
eine Vorrichtung zur Variierung der Leistung (63) des spektral verbreiterten Lichts (31)
umfasst,
wobei der Laser (9) einen Lichtstrahl (13) emittiert, der auf die mikrostrukturierte optische Lichtleitfaser (19) gerichtet ist, die das Licht des Lasers (9) spektral verbreitert, **dadurch gekennzeichnet, dass** der mikrostrukturierten optischen Lichtleitfaser (19) die Optik (33) nachgeordnet ist, die das spektral verbreiterte Licht (31) zu einem Beleuchtungslichtstrahl (29) formt, dass der Optik (33) der Strahlteiler (35) nachgeordnet ist, der einen Teillichtstrahl (37) abspaltet und auf eine Analysevorrichtung (39) lenkt, dass die Verarbeitungseinheit (47) die elektrischen Signale aus der Analysevorrichtung (39) empfängt und eine spektrale Zusammensetzung in Form eines Graphen (53) auf dem Monitor (51) darstellt, dass Mittel zur Vorwahl einer bestimmten spektralen Zusammensetzung mittels einer Veränderung des Graphen (53) auf dem Monitor (51) mit Hilfe der Computermaus (59) ausgestaltet sind, und dass die Vorrichtung zur Variierung der Leistung (63) des spektral verbreiterten Lichts (31) an Hand der vorgewählten spektralen Zusammensetzung ausgestaltet ist.

7. Vorrichtung nach Anspruch 6, **dadurch gekennzeichnet, dass** die Vorrichtung zur Beleuchtung (7) eine Fokussieroptik (15) beinhaltet, die den Lichtstrahl (13) des Lasers (9) auf die mikrostrukturierte optische Lichtleitfaser (19) fokussiert.

8. Vorrichtung nach Anspruch 6, **dadurch gekennzeichnet, dass** der Laser (9) ein Pulslaser ist.

9. Vorrichtung nach Anspruch 6, **dadurch gekennzeichnet, dass** die Vorrichtung zur Beleuchtung (7) eine Vorrichtung zur Variierung der Pulsdauer und/oder zur Variierung des Chirps des spektral verbreiterten Lichts beinhaltet.

10. Vorrichtung nach Anspruch 6, **dadurch gekennzeichnet, dass** die mikrostrukturierte optische Lichtleitfaser (19) aus einer Vielzahl von mikrooptischen Strukturelementen aufgebaut ist, die zumindest zwei unterschiedliche optische Dichten aufweisen.

11. Vorrichtung nach Anspruch 6, **dadurch gekennzeichnet, dass** die mikrostrukturierte optische Lichtleitfaser (19) einen ersten Bereich (99) und einen zweiten Bereich (97) beinhaltet, wobei der erste Bereich (99) eine homogene Struktur aufweist und in dem zweiten Bereich (97) eine Mikrostruktur (89) aus mikrooptischen Strukturelementen gebildet ist.

12. Vorrichtung nach Anspruch 6, **dadurch gekennzeichnet, dass** die mikrostrukturierte optische Lichtleitfaser (19) aus nebeneinander angeordnetem Glas- oder Kunststoffmaterial und Hohlräumen (95) besteht.

13. Vorrichtung nach Anspruch 6, **dadurch gekennzeichnet, dass** die mikrostrukturierte optische Lichtleitfaser (19) aus Photonic-Band-Gap-Material besteht.

14. Vorrichtung nach Anspruch 13, **dadurch gekennzeichnet, dass** die mikrostrukturierte optische Lichtleitfaser (23) eine Verjüngung (21) aufweist.

15. Vorrichtung nach einem der Ansprüche 6 bis 14, **dadurch gekennzeichnet, dass** die Vorrichtung zur Beleuchtung (7) in einem Mikroskop oder in einem konfokalen Scanmikroskop (69) oder in einem Flußzytometer oder in einem Endoskop oder in einem Chromatographen oder in einer Lithographievorrichtung verwendbar ist.

## Claims

1. Method for illuminating an object (79) comprising the following steps:
- radiating (1) the light beam (13) from a laser (9) into a microstructured optical light guiding fibre (19), which spectrally broadens the light of the light beam (13),
- shaping (3) the spectrally broadened light (31) to form an illumination light beam (29),
- splitting off a partial light beam (37) and directing the partial light beam (37) onto an analysis device (39);
- feeding electrical signals from the analysis device (39) to a processing unit (47), via which the spectral composition of the partial light beam (37) is represented in the form of a graph (53) on a monitor (51) to which a computer (49) is assigned;
- preselecting a specific spectral composition by clicking on the graph (53) by means of a computer mouse (59), wherein a dashed graph (61) is generated, which is deformable in accordance with the movement of the computer mouse (59);
- varying the power (63) of the spectrally broadened light, such that the illumination light beam (29) is set with regard to the preselected spectral composition of the spectrally broadened light (31); and
- directing (5) the illumination light beam (29) onto the object (79).

2. Method according to Claim 1, **characterized by** the following further steps:
- setting the power of the spectrally broadened light (31) and/or
- setting the polarization of the spectrally broadened light (31).

3. Method according to Claim 1, **characterized in that** the laser (9) is a pulsed laser.

4. Method according to Claim 3, **characterized by** the following further steps:
- setting the pulse width of the spectrally broadened light (31) and/or
- setting the chirp of the spectrally broadened light (31) .

5. Method according to Claim 1, **characterized in that** the method is used in microscopy or in endoscopy or in flow cytometry or in chromatography or in lithography or in video microscopy.

6. Device for illuminating (7) an object (79), wherein the device comprises
a laser (9),
a microstructured optical light guiding fibre (19), an optical unit (33),
a beam splitter (35),
an analysis device (39),
a processing unit (47),
a monitor (51),
a computer mouse (59) and
a device for varying the power (63) of the spectrally broadened light (31),
wherein the laser (9) emits a light beam (13) which is directed onto the microstructured optical light guiding fibre (19), which spectrally broadens the light from the laser (9), **characterized in that** the optical unit (33) is disposed downstream of the microstructured optical light guiding fibre (19) and shapes the spectrally broadened light (31) to form an illumination light beam (29), **in that** the beam splitter (35) is disposed downstream of the optical unit (33) and splits off a partial light beam (37) and directs it onto an analysis device (39), **in that** the processing unit (47) receives the electrical signals from the analysis device (39) and represents a spectral composition in the form of a graph (53) on the monitor (51), **in that** means are configured for preselecting a specific spectral composition by means of altering the graph (53) on the monitor (51) with the aid of the computer mouse (59), and **in that** the device for varying the power (63) of the spectrally broadened light (31) is configured on the basis of the preselected spectral composition.

7. Device according to Claim 6, **characterized in that** the device for illuminating (7) comprises a focusing optical unit (15), which focuses the light beam (13) from the laser (9) onto the microstructured optical light guiding fibre (19).

8. Device according to Claim 6, **characterized in that** the laser (9) is a pulsed laser.

9. Device according to Claim 6, **characterized in that** the device for illuminating (7) comprises a device for varying the pulse duration and/or for varying the chirp of the spectrally broadened light.

10. Device according to Claim 6, **characterized in that** the microstructured optical light guiding fibre (19) is constructed from a multiplicity of micro-optical structure elements having at least two different optical densities.

11. Device according to Claim 6, **characterized in that** the microstructured optical light guiding fibre (19) comprises a first region (99) and a second region (97), wherein the first region (99) has a homogenous structure and a microstructure (89) composed of micro-optical structure elements is formed in the second region (97).

12. Device according to Claim 6, **characterized in that** the microstructured optical light guiding fibre (19) consists of glass or plastic material and cavities (95) arranged alongside one another.

13. Device according to Claim 6, **characterized in that** the microstructured optical light guiding fibre (19) consists of photonic bandgap material.

14. Device according to Claim 13, **characterized in that** the microstructured optical light guiding fibre (23) has a taper (21).

15. Device according to any of Claims 6 to 14, **characterized in that** the device for illuminating (7) is useable in a microscope or in a confocal scanning microscope (69) or in a flow cytometer or in an endoscope or in a chromatograph or in a lithography device.

## Revendications

1. Procédé d'éclairage d'un objet (79) comprenant les étapes suivantes :
- injection (1) du faisceau lumineux (13) d'un laser (9) dans une fibre optique (19) structurée qui réalise un élargissement spectral de la lumière du faisceau lumineux,
- mise en forme (3) de la lumière au spectre élargi (31) en un faisceau lumineux d'éclairage (29),
- séparation d'un faisceau lumineux partiel (37) et déviation du faisceau lumineux partiel (37) sur un arrangement d'analyse (39) ;
- acheminement de signaux électriques issus de l'arrangement d'analyse (39) à une unité de traitement (47) par le biais de laquelle la composition spectrale du faisceau lumineux partiel (37) est représentée sous la forme d'un graphe (53) sur un moniteur (51) qui est associé à un ordinateur (49) ;
- présélection d'une composition spectrale définie en cliquant sur le graphe (53) au moyen d'une souris d'ordinateur (59), un graphe en pointillés (61) étant généré, lequel peut être déformé en fonction du mouvement de la souris d'ordinateur (59) ;
- variation de la puissance (63) de la lumière au spectre élargi de telle sorte que le faisceau lumineux d'éclairage (29) soit réglé du point de vue de la composition spectrale présélectionnée de la lumière au spectre élargi (31) ; et
- orientation (5) du faisceau lumineux d'éclairage (29) su l'objet (79).

2. Procédé selon la revendication 1, **caractérisé par** les étapes supplémentaires :
- réglage de la puissance de la lumière au spectre élargi (31) et/ou
- réglage de la polarité de la lumière au spectre élargi (31).

3. Procédé selon la revendication 1, **caractérisé en ce que** le laser (9) est un laser pulsé.

4. Procédé selon la revendication 3, **caractérisé par** les étapes supplémentaires :
- réglage de la largeur d'impulsion de la lumière au spectre élargi (31) et/ou
- réglage de la fréquence pulsée de la lumière au spectre élargi (31).

5. Procédé selon la revendication 1, **caractérisé en ce que** le procédé est utilisé en microscopie ou en endoscopie ou en cytométrie en flux ou en chromatographie ou en lithographie ou en vidéomicroscopie.

6. Arrangement pour éclairer (7) un objet (79), l'arrangement comportant
un laser (9),
une fibre optique (19) microstructurée,
une optique (33),
un diviseur de faisceau (35),
un arrangement d'analyse (39),
une unité de traitement (47),
un moniteur (51),
une souris d'ordinateur (59) et
un arrangement destiné à faire varier la puissance (63) de la lumière au spectre élargi (31),
le laser (9) émettant un faisceau lumineux (13) qui est orienté sur la fibre optique (19) microstructurée, laquelle réalise un élargissement spectral de la lumière du laser (9), **caractérisé en ce que** la fibre optique (19) microstructurée se trouve à la suite de l'optique (33), laquelle met en forme la lumière au spectre élargi (31) en un faisceau lumineux d'éclairage (29), **en ce que** l'optique (33) est disposée à la suite du diviseur de faisceau (35), lequel sépare un faisceau lumineux partiel (37) et le dévie sur un arrangement d'analyse (39), **en ce que** l'unité de traitement (47) reçoit les signaux électriques issus de l'arrangement d'analyse (39) et représente une composition spectrale sous la forme d'un graphe (53) sur le moniteur (51), **en ce que** des moyens sont configurés pour présélectionner une composition spectrale définie au moyen d'une modification du graphe (53) sur le moniteur (51) à l'aide de la souris d'ordinateur (59), et **en ce que** l'arrangement est configuré pour faire varier la puissance (63) de la lumière au spectre élargi (31) à l'aide de la composition spectrale présélectionnée.

7. Arrangement selon la revendication 6, **caractérisé en ce que** l'arrangement d'éclairage (7) contient une optique de concentration (15), laquelle concentre le faisceau lumineux (13) du laser (9) sur la fibre optique (19) microstructurée.

8. Arrangement selon la revendication 6, **caractérisé en ce que** le laser (9) est un laser pulsé.

9. Arrangement selon la revendication 6, **caractérisé en ce que** l'arrangement d'éclairage (7) contient un arrangement pour faire varier la durée d'impulsion et/ou pour faire varier la fréquence pulsée de la lumière au spectre élargi.

10. Arrangement selon la revendication 6, **caractérisé en ce que** la fibre optique (19) microstructurée est constituée d'une pluralité d'éléments structuraux micro-optiques qui présentent au moins deux densités optiques différentes.

11. Arrangement selon la revendication 6, **caractérisé en ce que** la fibre optique (19) microstructurée contient une première zone (99) et une deuxième zone (97), la première zone (99) possédant une structure homogène et une microstructure (89) d'éléments structuraux micro-optiques étant formée dans la deuxième zone (97).

12. Arrangement selon la revendication 6, **caractérisé en ce que** la fibre optique (19) microstructurée se compose de verre ou de matière plastique et d'espaces creux (95) disposés les uns à côté des autres.

13. Arrangement selon la revendication 6, **caractérisé en ce que** la fibre optique (19) microstructurée se compose de matériau à bande interdite photonique.

14. Arrangement selon la revendication 13, **caractérisé en ce que** la fibre optique (23) microstructurée présente un rétrécissement (21).

15. Arrangement selon l'une des revendications 6 à 14, **caractérisé en ce que** l'arrangement d'éclairage (7) peut être utilisé dans un microscope ou dans un microscope à balayage confocal (69) ou dans un cytomètre à flux ou dans un endoscope ou dans un chromatographe ou dans un arrangement de lithographie.
